# EUROPEAN PATENT SPECIFICATION

(11) **EP 1 121 020 B1**
(45) Date of publication and mention of the grant of the patent: **07.07.2004**
(21) Application number: 98955460.5
(22) Date of filing: 15.10.1998
(51) Int. Cl.: A23G 1/02

(54) **LOW-FLAVOR COCOA, A METHOD OF ITS PRODUCTION AND A USE THEREOF**
GESCHMACKARMER KAKAO, VERFAHREN ZUR HERSTELLUNG UND VERWENDUNG DESSELBEN
CACAO FAIBLE EN AROME, SON PROCEDE DE PRODUCTION ET SES UTILISATIONS

(43) Date of publication of application: 08.08.2001
(73) Proprietor: Kraft Foods R&D, Inc., 81737 Munich (DE)
(72) Inventor: BIEHL, Böle, 38116 Braunschweig (DE); LINDBLOM, Marianne, Gunilla, 191 39 Sollentuna (SE)
(74) Representative: Eyles, Christopher Thomas
(86) International application number: PCT/EP1998/006550
(87) International publication number: WO 2000/022935

(56) References cited:
- EP-A- 0 442 421
- EP-A- 0 614 613
- EP-A- 0 755 632
- WO-A-97/33484
- VOIGT ET AL.: "In-vitro formation of cocoa-specific aroma precursors: aroma-related peptides generated from cocoa-seed protein by cooperation of an aspartic endoprotease and a carboxypeptidase " FOOD CHEMISTRY, vol. 49, no. 2, 1994, pages 173-180, XP002106204
- BIEHL ET AL.: "Effect of acetic acid on subcellular structures of cocoa bean cotyledons" JOURNAL OF THE SCIENCE OF FOOD AND AGRICULTURE., vol. 33, 1982, pages 1101-1109, XP002106205 BARKING GB

## Description

The invention relates to novel low-flavor cocoa, a method of its production and a use thereof.

Cocoa is one of the most important ingredients, if not the most important ingredient, in the production of a variety of cocoa products such as different types of chocolate. Cocoa mass is produced by grinding cocoa nibs. Cocoa nibs are constituents of the seeds of the cocoa tree Theobroma cacao L. Cocoa seeds are cocoa beans with the surrounding pulp. The cocoa beans consist of the cocoa nibs and a shell that surrounds them.

The cocoa mass consists on the one hand of fatty constituents, the so-called cocoa butter, and on the other hand of non-fatty constituents which will be designated as cocoa powder in the following.

The cocoa butter on the one hand and the cocoa powder on the other have different functions and importance as regards the production of cocoa products. The cocoa butter, which like other fats also essentially consists of triglycerides, is crucial to the fat content of the cocoa product. The fat content, which is often even legally regulated as regards certain cocoa products, influences *inter alia* the consistency of the respective cocoa product. In chocolate for example, the fat content and melting range of the fat are important for sensory perception during consumption and are consequently relevant to the quality of the chocolate. The cocoa butter does not have a significant impact on flavor, i.e. the overall impression of aroma and taste, because the butter itself does not have a marked flavor.

The non-fatty constituents of the cocoa nibs, i.e. the cocoa powder, are essential, however, to the flavor of cocoa products.

It is the predominant view (cf. Belitz, Grosch, *Lehrbuch der Lebensmittelchemie*, 4th edition, published by Springer Verlag, Berlin-Heidelberg-New York, 1992, p. 874, and Fincke, *Handbuch der Kakaoerzeugnisse*, 2nd edition, Springer Verlag, Berlin-Heidelberg-New York, 1965, p. 321 et seq.) that most of the aroma compounds in cocoa are produced from so-called aroma precursors. These aroma precursors are produced from non aroma constituents of the unfermented cocoa beans by enzymatic reactions during the course of fermentation. Thus, fermentation is of particular importance for the flavor development. During the further treatment of cocoa, such as drying, roasting and conching, the precursors and aroma compounds undergo at least in part further quantitative and/or qualitative changes.

Various trials were made in the past to intensify the cocoa aroma and to reduce foreign aroma and taste notes by treating the cocoa nibs, cocoa beans and cocoa seeds. In this regard, attention should be drawn for example to WO97-33484, EP-A-755632, EP-A-749694, EP-A-614613 and EP-A-442421.

The off flavor notes are particularly disturbing levels of astringent and bitter notes. As regards astringency, it is assumed that it is caused by mono-, di- and oligomeric polyhydroxy phenols present in the nibs.

The polyhydroxy phenols can, depending on the pH, be oxidized with or without enzymatic assistance in an aqueous medium in the presence of oxygen. At slightly acidic to neutral pH the oxidation is enzymatic, whereas in an alkaline environment, the oxidation also proceeds quite rapidly in the presence of oxygen without enzymes. The polymeric oxidation products of the polyhydroxy phenols are less astringent, enabling astringency reduction by oxidation.

In previous efforts to intensify the cocoa flavor it was beneficial that during the course of normal fermentation acidification of the cocoa nibs favored the formation of aroma precursors. During subsequent de-acidification and aeration, particularly during the ensuing drying, the astringency was reduced by enzymatic browning (oxidation of the polyhydroxy phenols and polymerization of the oxidation products). In other words, previous efforts were successful inasmuch as they were conducive to the formation of aroma precursors and the reduction of astringency in the normal course of fermentation and drying.

With respect to the bitter taste notes it is known that theobromine has a bitter taste and that it can form complexes with diketopiperazines which bring about the typical bitter note of cocoa. Bitterness is enhanced by roasting. Controlling the bitter taste notes has so far succeeded only to a limited extent.

In the prior art efforts which concentrated on intensifying the cocoa flavor, it was therefore possible to produce cocoa with enhanced cocoa aroma and reduced astringency. The bitter taste notes could not, however, be controlled with any particular accuracy. This development was advantageous for those cocoa products for which an intense aroma was important.

The preparation of flavor-reduced cocoa, however, is not known so far, although the provision of such cocoa is extremely advantageous as regards for example the compensation of natural variations in intensity. Although there are types of cocoa which have a decreased aroma potential and/or reduced astringency, they are not produced purposefully. Rather they are the unintentional outcome of badly conducted treatments and vary considerably in their properties. The poor treatment also usually leads to quality defects such as mould development, a strong acidic taste and marked off-flavor notes.

The object of the present invention is therefore to make available flavor-reduced or low-flavor cocoa and a method of its controlled production.

In accordance with the invention, this object is solved by a method in which unfermented cocoa beans first undergo treatment so as to disrupt the cellular and subcellular structure at such conditions that the enzymatic production of aroma precursors is inhibited and subjecting the thus treated cocoa to an oxidation treatment. In doing so, conditions are selected such that as few aroma precursors and/or aroma compounds as possible are formed and other flavor components are significantly reduced or entirely eliminated.

A low-flavor cocoa which is suitable in various ways for the production of cocoa products is made available by the method according to the invention. Natural fluctuations in the flavor intensity of conventional cocoa can be easily and inexpensively compensated by blending with the low-flavor cocoa according to the invention. Thus, it is now possible, in addition to the previously known flavor intensification, to reduce flavor which is too intense, without markedly shifting the ratio of fat to non-fat constituents in the cocoa. The invention therefore makes it possible for the first time to provide cocoa with a standardized flavor regardless of the common variations due to the nature of the cocoa beans.

The low-flavor cocoa according to the invention also makes it possible to manufacture cocoa products, and in particular chocolate, in a more cost-effective manner. In a great many cocoa products, particularly in the case of chocolate, certain minimum quantities are specified for the content of cocoa butter and/or total cocoa solids. For example, § 13 of the 1975 German Cocoa Regulations stipulates that quality chocolates must contain at least 26 wt.% cocoa butter. To comply with such provisions, it was therefore necessary, when producing chocolate according to the prior art, to use neutrally flavored cocoa butter in addition to the flavor-carrying cocoa mass. Partly or completely removing the expensive cocoa butter in favor of a higher proportion of the cost effective cocoa mass has so far not been possible because an increase in the amount of cocoa mass was always accompanied by an intensification of flavor, which caused the product characteristics to change. Such changes and particularly a too strong flavor are not, however, accepted by the market or are accepted only to a low extent.

The low-flavor cocoa according to the invention, however, can immediately be used to increase considerably the amount of cocoa mass in various cocoa products, without enhancing the intensity of flavor thereby. In accordance with the invention, the production costs for a large number of cocoa products, especially chocolate, can therefore be reduced. This is possible because not only does the cocoa according to the invention not contain any aroma components or only contains few such components, but also because at the same time it is only slightly astringent and hardly tastes bitter or does not taste bitter at all. Further advantages of the invention will become apparent from the following description.

The method of producing low-flavor cocoa according to the invention essentially comprises two steps. In the first step, the unfermented cocoa beans are treated so as to destroy the cellular and subcellular structure, to release their ingredients and to inhibit enzymes which are involved in the formation of aroma precursors and flavors. In the second step, oxidation treatment is performed.

According to the invention, unfermented cocoa beans from freshly harvested pods are always used as a primary material. In other words, cocoa beans which quickly after harvest have been liberated from the pulp surrounding them are used, with the result that the microbial processes which usually begin upon storage or fermentation of cocoa seeds are absent as far as possible. This is achieved for example by removing the cocoa seeds of healthy pods as quickly as possible preferably within fewer than 20, particularly 10 days after harvest. The cocoa beans are then immediately largely liberated of the pulp that surrounds them. This can be done for example by mechanical means, assisted by washing. It is also possible to remove the pulp enzymatically or by a combination of mechanical and enzymatic processes.

The unfermented cocoa beans used as a starting material in accordance with the invention can be used just as they occur after removal of the pulp, or they can first be dried. Drying has the advantage that the cocoa beans then exhibit a longer shelf life and that the dried beans take up a much smaller transport volume than the pods. Drying the beans also ensures to a greater extent that undesirable fermentation, e.g. due to adhesive pulp residue, is suppressed.

Drying the cocoa beans can be made according to the processes known for drying fermented beans (see Fincke, *Handbuch der Kakaoerzeugnisse,* Springer Verlag, Berlin-Heidelberg-New York 1965, p. 54 et seq.). For example, drying in the sun and mechanical drying can be applied. The drying conditions should be chosen in such a way that the native constituents of the cocoa beans are preserved in their original form. It should also be ensured that no off aroma notes enter the cocoa beans during drying.

Drying processes in which the water content in the cocoa beans is reduced rapidly, i.e. within a few days or hours, to the desired value have proved beneficial. It is advantageous to keep the drying temperature below 50°C and preferably at 40°C or less. The drying temperature means the average temperature of the material to be dried. In this step, the water content of the cocoa beans is intended to be decreased to preferably less than 10, better less than 8 and particularly less than 5 wt.%.

If dried unfermented cocoa beans are used as a starting material for the method according to the invention, such beans must be treated with water before further treatment according to the inventive method. For this, the dried unfermented cocoa beans are suitably incubated in water at a temperature of not more than 70°C, preferably 55°C or less, particularly 45°C or less, e.g. 40°C, until the original water content (approx. 30 to 35 wt.%) has been essentially restored.

The time needed for the absorption of water depends on the preceding drying conditions, particularly the drying temperature and the temperature during incubation in water. For example, it was found that drying the beans at an elevated temperature results in a more rapid absorption of water. The same also applies to an increase in temperature during incubation in water. For instance, it was found that at a water-treatment temperature of 60°C, about 20 hours are necessary to reach the original water content (drying temperature 40°C). On the other hand, about 40 hours are necessary to restore the original water content at a drying and water-treatment temperature of 40°C. If an increased drying and/or water-treatment temperature shortens the duration of treatment, this is advantageous, but at the same time it should also be taken into consideration that a higher water-treatment temperature does, of course, also cause a greater amount of substances to be washed out of the cocoa nibs. The respective parameters for treating the dried unfermented beans with water can immediately be set by the skilled person addressed here.

Incubation in water is also advantageous if undried unfermented cocoa beans are used. These cocoa beans are incubated in water for about 10-48 hours at temperatures below 45°C, preferably at 20-40°C. The best results were obtained in the temperature range of 35-40°C for a treatment period of 40-48 hours. The cocoa beans absorb additional water due to an induction of germination. The water content rises, depending on incubation duration and temperature, above the starting value of about 30-35 wt.% to values of more than 40 wt.%. The water treatment of the dried cocoa beans and the swelling treatment of undried unfermented beans promotes the subsequent release of vacuole-bound ingredients.

Compared with the corresponding treatment cf dried and rewetted cocoa beans, the incubation of living, undried unfermented cocoa beans in water or hypotonic media leads to an additional effect. The ingredients are mobilized in the living cocoa beans, but post-mortal conversions which would result in the formation or alteration of the flavor potential are avoided. This effect which is advantageous for the properties of the cocoa according to the invention comes about when the status vivendi is ensured by complying with corresponding treatment conditions (temperature, treatment duration, nature of medium). This can be checked inter alia by measuring the pH of the homogenized nibs after incubation. A pH between 6.2 and 6.5 indicates that the incubation treatment has not caused them to be killed.

When incubating the cocoa beans, the pH in the nibs should not fall below a value of 6.0; here the pH in the nibs always means the pH of homogenized nibs. To achieve this, the pH of the aqueous medium used for incubation should range from 4.5 to 7.5. Apart from water as such a medium, other aqueous hypotonic media and in this particular case aqueous buffer systems containing inorganic or organic salts can be used. These buffer systems should be chosen such that they do not adversely affect the vitality and flavor of the cocoa beans.

Citric acid buffers in a low concentration (e.g. 35 mM; pH 5.0-5.5) have proved particularly suitable. Water or low concentrations of buffer with pH values of 5.5 or more, preferably 6.0 or more and suitably between 5.5 and 6.5 should be preferred when rewetting pre-dried cocoa beans.

When pretreating the cocoa seeds or cocoa beans for the purpose of depulping, water absorption and swelling, protective measures against undesirable infections are advantageous. These include surface sterilization of the pods used, the germ-free removal of seeds and the use of sterile water or sterile buffer solutions. Slightly acidic media for the incubation of undried cocoa beans (e.g. pH 5.5) and performing the incubations in conditions that exclude air (e.g. de-aerated media and incubation e.g. under nitrogen atmosphere) largely repress the development and metabolism of organisms which might impair the flavor of the final product. This also applies to the following step according to the invention for destroying the cellular and subcellular structure, releasing the constituents and inhibiting enzymes. The procedure that excludes air has also proved successful here.

In the next step, the cocoa beans undergo treatment in which the subcellular structure and here in particular the cell membranes and vacuoles in the cells of the cocoa nibs are broken open. In particular, the native precursors - present in the cell vacuoles - of the aroma precursors, as well as lytic enzymes and polyhydroxy phenols are released by this treatment, though without their undergoing enzymatic conversion to form aroma precursors or aroma compounds.

The subcellular structures are broken open according to the invention by treating the cocoa beans in an aqueous medium at an increased temperature and/or in the presence of acids.

To prevent the formation of aroma compounds, as desired according to the invention, precise control of the pH is necessary in this step so as to suppress the enzyme-catalyzed formation of aroma precursors. It was found that this suppression is successful when the pH at this stage is set such that the enzymes needed for the formation of the aromatic compounds are largely inactive. Particularly suitable pH values in the cocoa nibs have proved to be 4.5 or less or 6.0 or more.

If the treatment to destroy the subcellular structures in the cocoa nibs is to be performed at higher pH values, i.e. preferably at pHs of 6.0 or more, the approach adopted should be such that the cocoa nibs are treated in an aqueous medium having a corresponding pH at a temperature of 45°C or higher. In this step, the duration of treatment also depends on the temperature selected, whereby higher temperatures naturally lead to a shorter treatment time. Higher treatment temperatures ranging from 50 to 60°C are accordingly preferred, with very good results having been achieved in the temperature range of 55 to 60°C. The treatment period lasts for about 60 hours in this temperature range.

To avoid undesirable microbial metabolisms throughout the treatment period, it may be an advantage during this treatment for the reaction system to be kept free of oxygen as far as possible. This suitably occurs in that the treatment to destroy the subcellular structures is performed in a low-oxygen atmosphere (e.g. 1% or less O₂ saturation) or even an oxygen-free atmosphere, such as a protective gas atmosphere consisting of inert gases, preferably nitrogen and/or noble gases.

The treatment to destroy the subcellular structures in the cocoa nibs and at the same time prevent enzymatic formation of aroma precursors can also be made as successfully at low pH values, i.e. at pHs of 4.5 or less, preferably at pH 4.1 to 3.4, in the cocoa nibs. For this purpose, the cocoa beans are treated with an aqueous acid solution optionally at an increased temperature. Both inorganic and organic acids can in principle be used, with preference for amphiphilic acids. When selecting the acids, it should be borne in mind that they should not impair the flavor of the cocoa beans but readily penetrate into the cocoa nibs. Short-chain aliphatic monocarboxylic acids and in particular acetic acid have proved especially suitable.

In order to quickly change the pH in the cocoa beans by incubation in acid solution, both the acid concentration in the medium and the quantitative ratio of acid in the medium to cocoa beans are important. The acid concentration in the medium should not drop critically during absorption of the acid into the cocoa beans, and the individual cocoa beans should be in free contact with the medium. For this purpose, an at least 0.1 molar (M) acid solution is preferably used as a medium, and use of a 0.2 to 0.25 M acid solution is particularly suitable. The quantitative ratio of cocoa beans (g dry matter) to the volume of medium (ml) should advantageously be 1:3, preferably 1:5 or more. The cocoa beans' absorption of acid can be promoted by measures which increase the free volume of medium around individual beans, or by moving the cocoa beans and/or the medium.

If amphiphilic acids are used, the treatment temperature should be at least 20°C. The duration of treatment should be sufficient to bring about complete acid penetration of the cocoa beans. 40 hours and more, preferably 60 hours, have proved particularly effective for this purpose.

Particularly good results were achieved using amphiphilic acids and in this particular instance acetic acid. It is assumed that acetic acid is especially suitable as it due to its hydrophobic properties can penetrate the high fatty components in the cocoa beans and pervade biological membranes when the concentration is sufficient.

Diluted acetic acid or an acetic acid buffer should preferably be used as a medium. This approach has the advantage that if the concentration is sufficient in the surrounding medium the acetic acid in a steep concentration gradient progressively penetrates the nib tissue from the outside and that during the passage of the acid through the cells the pH quickly changes from values of more than 6.0 to values of less than 4.5. As a result, the enzymatic reactions taking place in the pH range of about 6.0 to 4.5 to form aroma precursors are suppressed particularly effectively. Although proteolyses also occur at pH values of less than 4.5, they do not result in the formation of aroma precursors.

A particular advantage is that the acetic acid penetrating into the tissue causes the destruction of the vital subcellular structure, with the result that this process also advances at temperatures of 40°C or less. Treatment with acetic acid solutions can therefore be performed at temperatures between 20 to more than 60°C, with particular preference for treatment at 50°C over a period of 60 hours.

Also in the case of treatment to destroy the subcellular structures at low pH values, i.e. particularly at pH values of 4.5 or less, it is advantageous to exclude oxygen as far as possible to avoid undesirable microbial metabolisms. Work therefore suitably proceeds in a low-oxygen or oxygen-free atmosphere consisting of e.g. nitrogen and/or a noble gas.

After acid treatment, the acid diffused into the cocoa beans is largely removed. For this purpose, the cocoa beans are separated from the acid medium and washed with water. The acid is then extracted from the cocoa nibs in various ways. This can be done by immersing the cocoa beans in water into which the acid diffuses from the cocoa beans. The water is changed many times to keep the acid concentration low. Alternatively, pure water is percolated through the batch of cocoa beans. In both cases, the acid can be extracted from the cocoa beans within 48 hours or less to such an extent that the pH of the cocoa nibs is 4.9 or more. This treatment to de-acidify the beans should also preferably take place by excluding air.

If acetic acid or another volatile acid is used for acid treatment, the acid can also be removed by distillation, preferably in a vacuum. For this purpose, the cocoa beans are preferably de-shelled, the cocoa nibs ground and then mixed with water e.g. in a volume ratio of cocoa to water of 1:1 or more. This mixture then undergoes repeated distillation or even steam distillation until the pH of the cocoa has reached the desired value of 4.9 or more.

The aim of de-acidification treatment is to raise the pH of the cocoa nibs to a value in which the enzyme-catalyzed oxidation of the polyhydroxy phenols is accelerated. In other words, after de-acidification treatment, the pH of the cocoa nibs should generally be in the range of 4.5 or more, particularly 4.9 or more, with particular preference for the range of 5.0 or more.

It should also be mentioned that the cocoa beans can also be washed or percolated in water if the destruction of the subcellular structures took place at a higher pH, i.e. at a pH of 6 or more.

After treatment to break open the cocoa beans' subcellular structures, the cocoa beans or the crushed cocoa nibs obtained in the case of de-acidification by distillation undergo treatment to oxidize the polyhydroxy phenols by oxygen. This oxidation treatment causes on the one hand a change of the color (browning) and on the other hand oxidation and polymerization of the polyhydroxy phenols which cause the astringency. A cocoa product with at least only low astringent notes is obtained as a result.

Oxidation occurs by allowing the cocoa to come into contact with a gas that contains oxygen, e.g. air. The whole cocoa beans that still contain water or the cocoa nibs obtained by peeling the cocoa beans can be used for this purpose. The cocoa beans or cocoa nibs are preferably used in a fragmented or ground form so as to accelerate oxygen absorption.

To achieve as complete oxidation as possible, oxidation treatment should preferably be performed at a pH in the nibs of 4.5 or more, with pH values of about 5.0 to 6.0 being particularly preferable in practice because oxidation of the polyhydroxy phenols proceeds ever more quickly as the pH rises. This is due on the one hand to the fact that the enzymes which assist oxidation of the polyhydroxy phenols reach their maximum activity at about pH 6.5 and on the other hand to the fact that above about pH 7 the polyhydroxy phenols can also be rapidly oxidized without enzymatic assistance. Polyphenol oxidase can also be added to accelerate and complete oxidation.

Oxidation is suitably performed such that air saturated with water is lead e.g. over crushed cocoa nibs in a thin layer or over repeatedly or continuously mixed crushed nibs. The necessary treatment time depends on the moisture content in the cocoa and on its temperature. The treatment time can be varied through variation of the air temperature and the moisture in the cocoa. The endpoint can be easily determined by monitoring the achieved browning or via the determination of the residual content of mono-, di- and oligomeric polyhydroxy phenols.

Temperatures in the material of 60°C or less are suitable, whereby temperatures above room temperature, i.e. from 20°C and in this particular case from 35 to 45°C, are particularly advantageous.

Shorter treatment periods at an increased temperature are in principle advantageous because they not only shorten the process overall but also prevent undesirable microbial reactions. In the case of enzymatic browning by the polyphenol oxidase present in the material, its inactivation as a result of excessive temperatures must nevertheless be taken into consideration.

The low-flavor cocoa obtained in this way is then dried and de-shelled, ground and conventionally worked into the respective cocoa products. As mentioned at the start, the low-flavor cocoa according to the present invention is particularly suitable for the production of chocolate, since it can immediately be worked into chocolate products as a substitute for pure cocoa butter.

The invention will now be explained in further detail on the basis of examples.

### Example 1

Seeds from ripe pods were mechanically depulped using sterilized cellulose and the cocoa beans (700g) incubated for 38 hours at 40°C in sterilized water (100g/280ml) in nitrogen atmosphere. The pH of homogenized cotyledons was 6.7 thereafter. The cocoa beans were separated from the incubation water, washed with sterilized water and incubated in sterilized water (100g/280ml) for the purpose of breaking up subcellular structures for 1 hour at 60°C and 20 hours at 55°C in nitrogen atmosphere. The pH of homogenized cotyledons was 6.3 thereafter. After being separated from the incubation water, the cocoa beans were peeled, the nibs ground, the mass mixed with water (100g/200ml) and concentrated in a rotation evaporator. The resultant wet mass was treated for the purpose of oxidation of the polyhydroxy phenols in a thin layer in the rotation evaporator under a constant flow of air saturated with water for 5 hours at 40°C in the mass. The mass was then dried in the air stream at 40°C. The obtained mass was then tasted by trained testers, whereby it was found that the mass only exhibited a low cocoa taste with simultaneously low astringent and bitter notes.

### Example 2

The approach adopted was like in Example 1 with the difference that unfermented dried cocoa beans (550g) were used as a starting material. For this purpose, seeds from ripe pods were mechanically depulped using sterilized cellulose and dried at 40°C. The dried cocoa beans were incubated for the purpose of swelling for 48 hours at 40°C in sterilized water in nitrogen atmosphere (100g/360ml). The pH of homogenized cotyledons was 6.6 thereafter. The cocoa beans were then washed with sterilized water and incubated for the purpose of breaking up subcellular structures 1 hour at 60°C and then for 17 hours at 55°C in sterilized water (100g/360ml) in nitrogen atmosphere. The pH of homogenized cotyledons was 6.5 thereafter. After being separated from the incubation water, the cocoa beans were peeled, the nibs ground, the mass mixed with water (100g/200ml) and concentrated in the rotation evaporator. The resultant wet mass was treated for the purpose of oxidation of the polyhydroxy phenols in a thin layer in the rotation evaporator under a constant flow of air saturated with water for 5 hours at 40°C in the mass. The mass was then dried in the air stream at 40°C. In sensory terms, the obtained cocoa mass did not differ from that according to Example 1.

### Example 3

The cocoa seeds (1100g, corresponding to 550g cocoa beans) were directly removed from fresh ripe pods under aseptic conditions and washed with sterilized water. They were then incubated for 1 hour at 23°C followed by 27 hours at 40°C in nitrogen atmosphere in 1.5 litters of sterilized medium (NaOH/citrate buffer, 35 mM, pH 5.5) in the presence of 0.2 % pectinase (prep. from mould). The pH of homogenized cotyledons was 6.3 thereafter. After removal of the medium and washing in sterilized water, the cocoa beans were incubated in 1.5 litters of a sterilized aqueous acetic acid solution (0.2 M) for 66 hours at 50°C in nitrogen atmosphere. The pH of homogenized cotyledons was 4.0 thereafter. The cocoa beans were then repeatedly washed with water until the pH of the mass was 4.7, peeled and ground. The mass was mixed with water (200ml/100g mass) and the water driven out at 40°C in a rotation evaporator. The resultant wet mass was treated for the purpose of oxidation of the polyhydroxy phenols in a thin layer in the rotation evaporator under a constant stream of air saturated with water for 5 hours at 40°C. The mass was then dried in the air stream at 40°C. The mass obtained in this way was tasted by trained testers, whereby it was found that the mass only exhibited a low cocoa taste with simultaneously low astringent and bitter notes.

### Example 4

Based on the following recipes, milk chocolate was produced in a conventional manner.

| | Reference | Sample 1 | Sample 2 |
|---|---|---|---|
| Cocoa liquor, standard | 12.6 | 9.5 | 15.5 |
| Cocoa liquor, low flavor | - | 6.0 | - |
| Cocoa butter | 17.4 | 15.8 | 15.8 |
| Sucrose | 47.4 | 46.1 | 46.1 |
| Whole milk powder | 22 | 22 | 22 |
| Lecithin | 0.6 | 0.6 | 0.6 |

When tested by experienced tasters no significant difference was noted between the Sample 1 and the reference but a significant difference was noted between Sample 1 and Sample 2 with Sample 2 having significantly higher cocoa flavor.

## Claims

1. A method of producing low-flavor cocoa from unfermented cocoa beans, comprising the steps of
- treating the cocoa beans to destroy the cellular and subcellular structures and
- oxidation treatment.

2. A method according to claim 1, wherein the pH in the cocoa nibs is 4.5 or less or 6.0 or more in said first step to destroy the cellular and subcellular structures.

3. A method according to claim 1 or claim 2, wherein the temperature is 20 to 70°C in said first step to destroy the cellular and subcellular structures.

4. A method according to any one of the preceding claims, wherein undried unfermented cocoa beans are used as a starting material, said beans undergoing swelling treatment before said first step to destroy the cellular and subcellular structures.

5. A method according to any one of claims 1 to 3, wherein dried unfermented cocoa beans which undergo treatment with water before said first step to destroy the cellular and subcellular structures are used as a starting material.

6. A method according to any one of the preceding claims, wherein said cocoa beans are treated with an aqueous acetic acid solution in said first step to destroy the cellular and subcellular structures.

7. A method according to claim 6, wherein at least 3 ml of an at least 0.1 molar acetic acid solution per g cocoa beans relative to the dry weight are used.

8. A method according to any one of the claims 6 or 7, wherein after incubation, the acetic acid is removed from said cocoa beans by addition of water or by distillation.

9. A method according to any one of the preceding claims, wherein said cocoa beans are peeled and/or crushed before the oxidation treatment.

10. Low-flavor cocoa obtainable according to the method defined in any one of the preceding claims.

11. A low-flavor cocoa mass obtainable by grinding said low-flavor cocoa according to claim 10.

12. A low-flavor cocoa powder obtainable by separating the fatty constituents from low-flavor cocoa according to claim 10 or low-flavor cocoa mass according to claim 11.

13. Chocolate containing low-flavor cocoa mass according to claim 11.

14. A cocoa mixture containing low-flavor cocoa mass according to claim 11 and at least one other cocoa component.

15. Use of a low-flavor cocoa mass according to claim 11 in cocoa products.

16. Use according to claim 15, wherein said cocoa products are chocolate products.

## Patentansprüche

1. Verfahren zur Erzeugung eines geschmacksarmen Kakaos aus nicht-fermentierten Kakaobohnen, umfassend die folgenden Schritte:
• Behandeln der Kakaobohnen unter Zerstörung der zellulären und subzellulären Strukturen und
• Oxidationsbehandlung.

2. Verfahren nach Anspruch 1, worin der pH in den Kakaospitzen 4,5 oder weniger oder 6,0 oder mehr im ersten Schritt zur Zerstörung der zellulären und subzellulären Strukturen beträgt.

3. Verfahren nach Anspruch 1 oder Anspruch 2, worin die Temperatur 20 bis 70°C im ersten Schritt zur Zerstörung der zellulären und subzellulären Strukturen beträgt.

4. Verfahren nach einem der vorhergehenden Ansprüche, worin nicht-getrocknete, nicht-fermentierte Kakaobohnen als Ausgangsmaterial verwendet werden, wobei die Bohnen eine Quellbehandlung vor dem ersten Schritt zur Zerstörung der zellulären und subzellulären Strukturen eingehen.

5. Verfahren nach einem der Ansprüche 1 bis 3, worin getrocknete, nicht-fermentierte Kakaobohnen, die eine Behandlung mit Wasser vor dem ersten Schritt zur Zerstörung der zellulären und subzellulären Strukturen eingehen, als Ausgangsmaterial verwendet werden.

6. Verfahren nach einem der vorhergehenden Ansprüche, worin die Kakaobohnen mit einer wässrigen Essigsäurelösung im ersten Schritt zur Zerstörung der zellulären und subzellulären Strukturen behandelt werden.

7. Verfahren nach Anspruch 5, worin zumindest 3 ml einer wenigstens 0,1 molaren Essigsäurelösung pro Gramm Kakaobohnen in bezug auf das Trockengewicht verwendet werden.

8. Verfahren nach einem der Ansprüche 6 oder 7, worin nach der Inkubation die Essigsäure von den Kakaobohnen durch Zugabe von Wasser oder durch Destillation entfernt wird.

9. Verfahren nach einem der vorhergehenden Ansprüche worin die Kakaobohnen vor der Oxidationsbehandlung abgeschält und/oder zerstossen werden.

10. Geschmacksarmer Kakao, erhältlich nach dem Verfahren wie in einem der vorhergehenden Ansprüche definiert.

11. Geschmacksarme Kakaomasse, erhältlich durch Mahlen des geschmacksarmen Kakaos nach Anspruch 10.

12. Geschmacksarmes Kakaopulver, erhältlich durch Trennen der Fettbestandteile von geschmacksarmem Kakao nach Anspruch 10 oder geschmacksarmer Kakaomasse nach Anspruch 11.

13. Schokolade mit einer geschmacksarmen Kakaomasse nach Anspruch 11.

14. Kakaomischung, umfassend geschmacksarme Kakaomasse nach Anspruch 11 und zumindest eine andere Kakaokomponente.

15. Verwendung einer geschmacksarmen Kakaomasse nach Anspruch 11 in Kakaoprodukten.

16. Verwendung nach Anspruch 15, worin die Kakaoprodukte Schokoladenprodukte sind.

## Revendications

1. Procédé de production de cacao faiblement aromatisé provenant de fèves de cacao non fermentées, comprenant les étapes de :
- traitement des fèves de cacao pour détruire les structures cellulaires et sous-cellulaires et
- traitement d'oxydation.

2. Procédé selon la revendication 1, dans lequel le pH dans les morceaux de cacao est de 4,5 ou moins ou de 6,0 ou plus dans ladite première étape de destruction des structures cellulaires et sous-cellulaires.

3. Procédé selon la revendication 1 ou 2, dans lequel la température est de 20 à 70°C dans ladite première étape de destruction des structures cellulaires et sous-cellulaires.

4. Procédé selon l'une quelconque des revendications précédentes, dans lequel les fèves de cacao non fermentées non séchées sont utilisées comme matériau de départ, lesdites fèves étant soumises à un traitement de gonflement avant ladite première étape de destruction des structures cellulaires et sous-cellulaires.

5. Procédé selon l'une quelconque des revendications 1 à 3, dans lequel les fèves de cacao non fermentées séchées qui subissent un traitement avec de l'eau avant ladite première étape de destruction des structures cellulaires et sous-cellulaires sont utilisées comme matériau de départ.

6. Procédé selon l'une quelconque des revendications précédentes, dans lequel lesdits fèves de cacao sont traités avec une solution d'acide acétique aqueuse dans ladite première étape de destruction des structures cellulaires et sous-cellulaires.

7. Procédé selon la revendication 6, dans lequel au moins 3 ml d'une solution d'acide acétique à au moins 0,1 molaire par g de fève de cacao relativement au poids sec sont utilisés.

8. Procédé selon l'une quelconque des revendications 6 ou 7, dans lequel après incubation, l'acide acétique est enlevé des fèves de cacao, par addition d'eau ou par distillation.

9. Procédé selon l'une quelconque des revendications précédentes, dans lequel les fèves de cacao sont pelées et/ou broyées avant le traitement d'oxydation.

10. Cacao faiblement aromatisé susceptible d'être obtenu par le procédé défini dans l'une quelconque des revendications précédentes.

11. Masse de cacao faiblement aromatisé susceptible d'être obtenue en broyant ledit cacao faiblement aromatisé selon la revendication 10.

12. Poudre de cacao faiblement aromatisé susceptible d'être obtenue en séparant les constituants gras du cacao faiblement aromatisé selon la revendication 10 ou de la masse de cacao faiblement aromatisée selon la revendication 11.

13. Chocolat contenant une masse de cacao faiblement aromatisée selon la revendication 11.

14. Mélange de cacao contenant une masse de cacao faiblement aromatisée selon la revendication 11 et au moins un autre composant de cacao.

15. Utilisation d'une masse de cacao faiblement aromatisée selon la revendication 11 dans les produits de cacao.

16. Utilisation selon la revendication 15, dans laquelle lesdits produits de cacao sont des produits de chocolat.
